# EUROPEAN PATENT SPECIFICATION

(11) **EP 1 748 429 B1**
(45) Date of publication and mention of the grant of the patent: **16.07.2008**
(21) Application number: 05254740.3
(22) Date of filing: 28.07.2005
(51) Int. Cl.: G11B 7/00, G11B 7/0065

(54) **Data read/write device for holographic storage medium and method thereof**
Datenaufzeichnungs-/wiedergabegerät für holografische Träger und Verfahren hierfür
Dispositif et procédé d' enregistrement/de reproduction pour des supports holographiques

(43) Date of publication of application: 31.01.2007
(73) Proprietor: SAMSUNG ELECTRONICS CO., LTD., Suwon-si, Gyeonggi-do (KR)
(72) Inventor: Kim, Ji-Deog, Gangnam-gu Seoul (KR)
(74) Representative: Ertl, Nicholas Justin

(56) References cited:
- EP-A- 1 494 221
- EP-A- 1 544 850
- WO-A-20/05066939
- US-A- 5 121 231
- US-A1- 2003 025 955

## Description

### BACKGROUND OF THE INVENTION

Apparatuses and methods consistent with the present invention relate to reading data from and writing data to a holographic storage medium, and more particularly, to fast reading and writing data with respect to a holographic storage medium using a reflective data mask.

With the widespread use of computers, demands have increased for improved computer peripherals and components which can enable more efficient use of computers and improved performance. As one example, there are a variety of supplementary storage mediums which have been developed to store programs or data in the event of sudden computer cutoff. A magnetic storage medium and an optical disc storage medium are most widely used as a supplementary storage medium.

The magnetic storage medium such as a floppy disk or a hard disk uses magnetic force to store data. In particular, a hard disk has a large storage capacity, and provides fast information input and output. Therefore, a hard disk is mainly used as a supplementary storage device of personal computers (PCs). Before hard disks, floppy disks were used as supplementary storage devices for PCs. Floppy disks are convenient in that they are portable, but provide relatively small storage capacity such that a large number of floppy disks are required to store multimedia data.

Optical discs, or laser disc devices, have been developed to make up for the above shortcoming of portable storage mediums such as floppy, and their use has currently exploded, mainly due to advantages such as far larger storage capacity and faster search. As for such optical discs, compact disc-read only memories (CD-ROMs) and digital video discs (DVDs) are generally available.

However, with the rapid development of computer technologies and information technologies in recent years, a storage medium which can hold data more than the currently-available ones is demanded. Since CD can not hold a vast amount of data (i.e., hundreds of billion bytes), a new form of improved storage medium is required. A holographic information storage technology which uses the principle of three-dimensional holography to store lights having information onto photosensitive media, has been suggested to meet such demands.

Holography relates to storing information in the form of optical interference patterns in a light-sensitive inorganic crystal or polymer material. The optical interference patterns are formed by using two laser beams which interfere with each other. More specifically, a reference beam which does not contain any data, and an object beam containing predetermined data, interfere with each other, thus forming interference patterns. The interference patterns are stored in a photosensitive storage medium while going through chemical or physical conversion. Therefore, a "hologram" refers to a film which stores an image of an object in the form of interference patterns, and "holography" is the technology applied to the hologram.

By using three-dimensional holography, information can be stored in three dimensions. Because angle, phase and wavelength of the reference beam are differed and varied to store and recover high density data, advantages such as high speed and capacity can be obtained.

However, since copying the hologram data is not as fast as the existing optical recording medium, holography has been rather more focused on write-once, read-many (WORM) or read and write (RW) systems. While WORM or RW holography does not necessarily require fast copying because consumers read and write data, a ROM scheme requires fast copying method because a manufacturer needs to produce a massive amount of mediums containing the same data. Accordingly, if there is no particular process for fast copying of hologram data, holography can not be utilized in the ROM method.

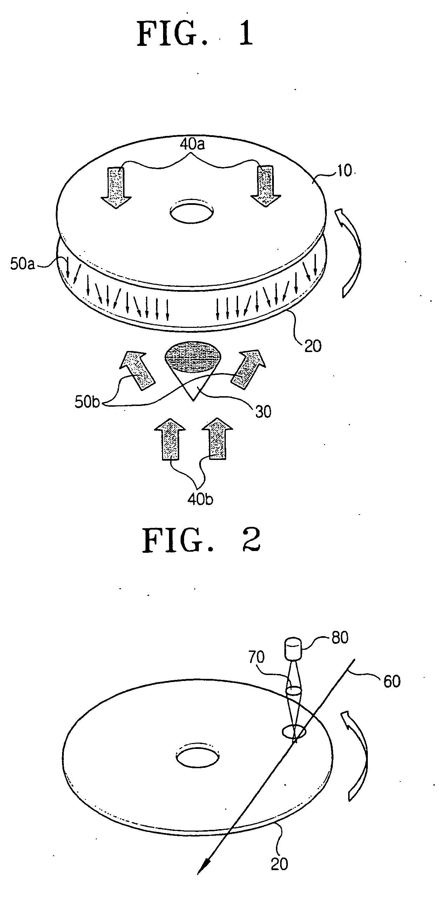

FIG. 1 shows an example of a conventional method which has been suggested in an effort to overcome the above-mentioned problems. FIG. 1 shows the structure of a device which copies data onto a holographic ROM. According to FIG. 1, a light emitted from a laser source (not shown) is divided into two beams 40a and 40b by a beam splitter, and the two beams 40a and 40b are incident on a transmissive data mask 10 and a conical mirror 30, respectively.

The transmissive data mask 10 stores data in the form of pits of various lengths. Therefore, the light 40a enters and passes through the transmissive data mask 10 and is incident on the storage medium 20 as a signal (object) beam 50a which contains the data. In other words, the signal beam 50a comes from the transmissive data mask 10. Examples of the conventional method shown in FIG. 1 can be found in European patent applications EP-A-1544850 and EP-A1494221.

Meanwhile, the beam 40b is reflected from the surface of the conical mirror 30 as a reference beam 50b which does not contain any information. The reference beam 50b is incident on the storage medium 20 from various angles.

Accordingly, the object beam 50a and the reference beam 50b are incident on upper and lower surfaces, respectively, of the storage medium from different angles, thus interfering with each other and being stored in the storage medium 20 in the form of hologram.

The conical mirror 30 may be replaced with another conical mirror of various angles, and the data mask 10 may be replaced with another data mask which store other data. Then, by irradiating the reference beam 50b and the object beam 50a in the same way as described above, the reference beam 50b enters the storage medium 20 from a different angle and interferes with the object beam 50a containing different data. As a result, data is recorded. Because beams enter the storage medium 20 from different angles, multiple data can be stored at the same area, and accordingly, fast data copying can be obtained via the holography.

FIG. 2 shows data reading process from a storage medium 20 which stores data according to the method as shown in FIG. 1. Referring to FIG. 2, as a phase conjugate wave 60 with respect to a reference beam is irradiated to the storage medium 20 at the direction opposite to the incident direction of the reference beam, the phase conjugate wave 60 of the signal beam incident on the storage medium 20 is reproduced at the location where the transmissive data mask 10 was located.

The read data is converged by a pickup lens 70, and detected in an optical signal detector 80. Meanwhile, by irradiating the phase conjugate wave 60 at different angles, all the data stored at different angles can be read out.

Although the holographic ROM with relatively fast data copying is possible by writing or reading data with the techniques of FIGS. 1 and 2, a problem exists in that it is that it is difficult to produce a conical mirror 30 having uniform reflective surfaces. The conical mirror 30 having uniform reflective surfaces is required in order to irradiate reference beam onto the storage medium 20 with a uniform incident angle (FIG. 1).

Additionally, it is difficult to maintain the phase conjugate wave 60 with respect to the reference beam 50b at an oblique angle with reference to the storage medium 20, and to vary the multi-patterned data at an exact irradiation angle to read out the data.

### SUMMARY OF THE INVENTION

According to an aspect of the present invention, there is provided a holographic data writing apparatus including: a laser beam irradiating device irradiating a laser beam onto a storage medium which is capable of storing a holographic data therein; and a reflective data mask arranged adjacent to the storage medium, such that the storage medium is located between the laser beam irradiating device and the reflective data mask, wherein the reflective data mask stores data to be copied, and when the laser beam is transmitted through the storage medium and is incident thereon, the reflective data mask reflects the incident laser beam in the form of a signal beam corresponding to the data onto the storage medium, such that interference patterns of the laser beam and the signal beam are written in the storage medium.

The reflective data mask may store the data in a pit pattern, and generate the signal beam when the laser beam is irradiated thereto, by diffracting the laser beam corresponding to the pit pattern.

The multiple data may be written in a predetermined area of the storage medium, by replacing with a second reflective data mask which stores therein second data in a pit pattern.

The laser beam irradiating device may record multiple data, by varying the wavelength of the laser beam. In other words, by varying the wavelength of the laser beam within an acceptable range and irradiating the varied laser beam to the storage medium, multiple data can be recorded at the same area of the storage medium.

The invention also provides a holographic data reading apparatus for reading data from a storage medium which stores therein holographic data by the interference patterns between a reference beam and a signal beam. The holographic data reading apparatus may include a reference beam irradiating device irradiating the reference beam onto the storage medium in a substantially perpendicular relation such that a signal beam is recovered corresponding to the reference beam; and an optical signal detecting device detecting the recovered signal beam and confirming the data indicated by the signal beam.

The reference beam irradiating device may include a light source outputting a laser beam in a substantially parallel beam; a beam splitter changing the path of the laser beam being irradiated from the light source, and causing the laser beam to operate as the reference beam; and an objective lens converging the laser beam of the path changed by the beam splitter, onto a predetermined area of the storage medium.

An aperture may be further provided in front of the optical signal detecting device to adjust a reproduce area of the signal beam so that only a signal beam, which is reproduced from a reproducing-intended pit of the storage medium, can be selectively passed.

The holographic data reading apparatus may further include a focusing lens to adjust focal point of the signal beam which is recovered from the storage medium. As a result, data can be detected with more accuracy.

In order to detect multiple data stored at the same area, the reference beam irradiating device may irradiate the laser beam to the same area of the storage medium, with varying the wavelength of the reference beam. As the signal beams are recovered corresponding to the respective wavelengths of the reference beam, data are detected from the signal beams, and therefore, multiple data can be read.

The invention also provides a holographic data writing method including: (a) irradiating a laser beam onto a storage medium which is capable of writing hologram data; (b) the laser beam transmitting through the storage medium and being incident on a reflective data mask which stores therein data for copy onto the storage medium; (c) the reflective data mask reflecting the laser beam to the storage medium in the form of a signal beam corresponding to the data; and (d) interference patterns of the laser beam and the signal beam being written in certain area of the storage medium as the holographic data.

As the reflective data mask is storing the data in pit pattern, the reflective data mask may generate the signal beam when the laser beam is irradiated thereto, by diffracting the laser beam corresponding to the pit pattern.

Recording of multiple data in the certain area of the storage medium by varying the wavelength of the laser beam, may be further provided.

The method may include replacing the reflective data mask with a second reflective data mask which stores therein second data; and varying the wavelength of the laser beam within a variable range, and irradiating the wavelength-varied laser beam to the storage medium.

The invention also provides a holographic data reading method for reading out data from a storage medium which stores therein holographic data with interference patterns between a reference beam and a signal beam. The holographic data reading method may include: irradiating the reference beam to certain area of the storage medium from where the data needs be read; the storage medium recovering a signal beam corresponding to the reference beam; and confirming data indicated by the signal beam, by detecting the recovered signal beam.

The irradiating the laser beam may include: outputting a laser beam in a substantially parallel pattern; changing the path of the laser beam to substantially perpendicular relation with respect to the storage medium, to cause the laser beam to operate as the reference beam; and converging the laser beam, which enters the storage medium in substantially perpendicular relation, to certain area of the storage medium.

A recovery area of the signal beam may be adjusted so that only the signal beam, which is recovered from a reproduce-intended pit of the storage medium, can be selectively passed.

The holographic data reading method may further include adjusting focal point of the signal beam which is recovered from the storage medium, such that data can be detected with higher accuracy.

In order to detect the multi-recording data, the wavelength of the reference beam may be varied and the wavelength-varied laser beam may be irradiated to the same area of the storage medium to reproduce the multi-recording data from the area, can further be provided.

The invention thus provides a data reading and writing apparatus and methods thereof, which are capable of reading and writing data with respect to a holographic storage medium, with simple hardware, by writing data with a reflective data mask and reading written data by irradiating a reference beam to be incident in the storage medium in a perpendicular relation.

### BRIEF DESCRIPTION OF THE DRAWINGS

The above objects and other features of the present invention will become more apparent by describing in detail an exemplary embodiment thereof with reference to the attached drawings, in which:
FIG. 1 is a view illustrating the structure of a conventional writing apparatus writing data onto a holographic storage medium;
FIG. 2 is a view illustrating the structure of a conventional reading apparatus reading data from a holographic storage medium;
FIG. 3 is a view illustrating a data writing apparatus writing data onto a holographic storage medium according to an exemplary embodiment of the present invention;
FIG. 4 is a view illustrating the structure of a data reading apparatus reading data from a holographic storage medium according to an exemplary embodiment of the present invention;
FIG. 5 is a flowchart of a method for writing data with the data writing apparatus of FIG. 3 according to an exemplary embodiment of the present invention; and
FIG. 6 is a flowchart provided for explanation of a method for reading data with the data reading apparatus of FIG. 4 according to an exemplary embodiment of the present invention.

### DETAILED DESCRIPTION OF EXEMPLARY EMBODIMENTS OF THE INVENTION

Hereinafter, exemplary embodiments of the present invention will be described in detail with reference to the drawings.

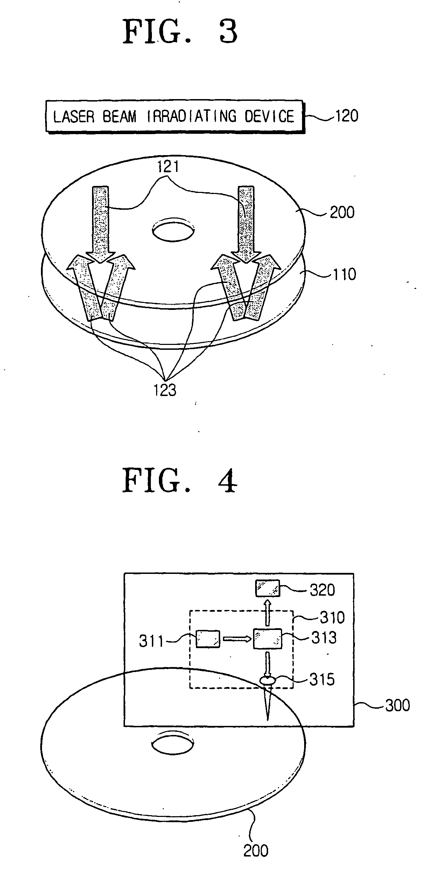

FIG. 3 is a view illustrating a data writing apparatus writing data onto a holographic storage medium according to an exemplary embodiment of the present invention. Referring to FIG. 3, a holographic data writing apparatus according to an exemplary embodiment of the present invention includes a reflective data mask 110 and a laser beam irradiating device 120, thereby writing data onto a holographic storage medium 200.

Among the organic high polymer materials which are currently receiving many attentions from the industry, the holographic storage medium 200 may be formed of a photosensitive high molecule polymer of relatively economical price such as a photopolymer.

In order to write data, a laser beam 121 is irradiated by a laser beam irradiating device 120. The irradiated laser beam 121 has a constant large-area in the direction toward the holographic storage medium 200. At this time, the laser beam 121 is a reference beam which does not contain any data. The reference beam 121 passes through a part of the holographic storage medium 200 and is incident on the reflective data mask 110.

The reflective data mask 110 may include coded pits in the same or similar way as the general bit-type CDs or DVDs. Accordingly, the reflective data mask 110 may store data in pit form, and upon irradiation of the reference beam 121, generate a signal beam 123 by diffracting the light to correspond to the stored data and irradiate the signal beam 123 onto the holographic storage medium 200. Accordingly, the reference beam 121 from the laser beam irradiating device 120, and the signal beam 123 reflected against the reflective data mask 110, interfere with each other, thus forming predetermined interference patterns. The predetermined interference patterns are written in the holographic storage medium 200 in the form of hologram data.

An optical coating is provided on a surface of the holographic storage medium 200 opposite to the surface where the reference beam 121 enters, to thus vary the transmission rate of light. As a result, an intensity of the signal beam 123 and the reference beam 121 can be adjusted. The optical coating may use a multi-layer structure using a dielectric substance.

According to an exemplary embodiment of the present invention, a wavelength of the reference beam 121 from the laser beam irradiating device 120 is varied for multiple data recording. In other words, when a new reflective data mask 110 is replaced, the light source 311 inside the laser beam irradiating device 120 is controlled to irradiate the light such that the reference beam 121 can have a wavelength which is varied within a possible range. As a result, multiple data can be written at the same area.

FIG. 4 illustrates the structure of a data reading apparatus which reads out data from the holographic storage medium 200 storing data in the method of FIG. 3. According to FIG. 4, the reading apparatus 300 includes a reference beam irradiating device 310 and an optical signal detecting device 320.

The reference beam irradiating device 310 irradiates a laser beam to the holographic storage medium 200 as a reference beam, to thus read out a signal beam corresponding to the reference beam.

According to one aspect of the present invention, the reference beam irradiating device 310 includes a light source 311, a beam splitter 313, and an objective lens 315. The light source 311 operates to output a laser beam in a parallel pattern. In this exemplary embodiment, the light source 311 is a laser beam source which includes a collimator to convert laser beam of different angles into parallel beams. Accordingly, when a laser beam is irradiated from the light source 311 in parallel pattern, the path of the light beam is changed at the beam splitter 313, and therefore, the light beam falls incident on the objective lens 330. The light beam here is a reference beam which does not contain any data. Meanwhile, the objective lens 315 operates to focus the reference beam on a focal point. For data reading, the position of the objective lens 315 is adjusted so that the beams can be converted in the holographic storage medium 200.

When the beams are converged such that the waist of the reference beam is positioned on the location where the hologram is written, because signals have the same characteristics as the parallel beams inside the Rayleigh range, signal beams are directly read out. In this exemplary embodiment, the Rayleigh range is larger than the thickness of the holographic storage medium 200 to enable signal of little noise to be read out.

When the reference beam is irradiated to the holographic storage medium 200 by the reference beam irradiating device 310, signal beam is recovered to the pattern which is same as it is outputted from the reflective data mask 110. The recovered signal beam is converted to a parallel beam by the objective lens 315 and converged into the optical signal detecting device 320, and the optical signal detecting device 320 confirms the data contained in the signal beam.

As mentioned above, because the radiated signal beam is in a same pattern as if it is emitted from the reflective data mask 110, the signal beam does not form a precise parallel beam when it passes through the objective lens 315 that the reference beam also passes through. Accordingly, a focusing lens is additionally provided in front of the optical reference detecting device 320 to adjust the focal point of the signal beam. By doing so, a difference of focal surfaces may be compensated.

Meanwhile, because all the data of the concerned area are read out when the reference beam is irradiated to the area of the holographic storage medium 200, a proper tool such as an aperture may be used to read out desired data only. In other words, by adjusting the aperture, the area of the signal beam to the optical signal detecting device 320 can be adjusted, and a signal beam which is read out from particular pits of the holographic storage medium 200 can be detected.

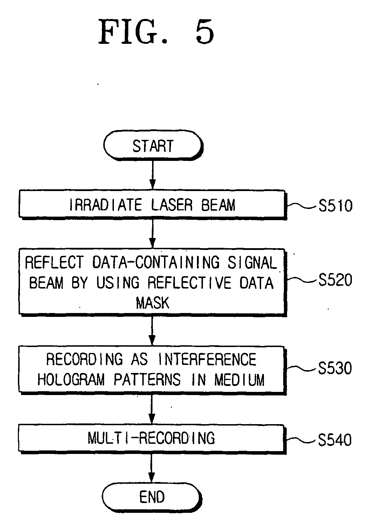

FIG. 5 is a flowchart of a method for writing data to the holographic storage medium 200 using the holographic data writing device 100 of FIG. 3 according to an exemplary embodiment of the present invention. According to FIG. 5, after placing the reflective data mask 110, which stores data in pits, adjacent to the holographic storage medium 200, a reference beam is irradiated to the holographic storage medium 200 (S510). The holographic storage medium 200 may utilize an optical polymer.

The reference beam then passes through a part of the holographic storage medium 200, is diffracted from the reflective data mask 110, and is incident on the holographic storage medium 200 in the form of a signal beam (S520).

The laser beam from the laser beam irradiating device 120, i.e., the reference beam 121, interferes with the signal beam 123 which is diffracted. Therefore, the interference patterns are directly stored in the storage medium 200 (S530). A manufacturer of ROM type hologram storage mediums may copy the data very fast.

The recording pattern may be varied by replacing the reflective data mask 110 with a new reflective data mask with different data, varying the wavelength of the reference beam 121, and irradiating the reference beam 121 onto the same area of the holographic storage medium 200 (S540). Accordingly, the manufacturer can increase the data storage capacity of the holographic storage medium 200, to a far larger extent than existing optical recording mediums.

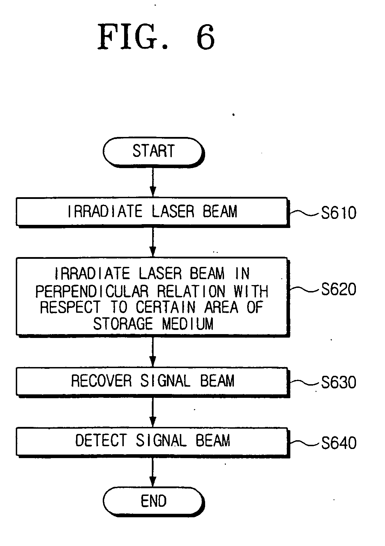

FIG. 6 is a flowchart provided for explanation of a method for reading data from the holographic data of FIG. 5. According to FIG. 6, first, a reference beam, which has the same wavelength as that irradiated at the time of data writing, is irradiated to the holographic storage medium 200 (S610).

In this case, the reading apparatus of FIG. 4 according to an exemplary embodiment of the present invention irradiates a laser beam of the light source 311 to be perpendicularly incident on the holographic storage medium 200 by using the beam splitter 313 and the objective lens 315 (S620).

When the reference beam is irradiated onto the holographic storage medium 200, a corresponding signal beam is directly read out (S630). Because the read signal beam appears as if it is directly irradiated from the reflective data mask 110 which is provided below, a lens may be additionally provided to adjust image focal point. Further, an aperture may be additionally provided to adjust area of the signal beam to the optical signal detecting apparatus 320 when it is necessary to read out certain data only.

The read signal beam is detected at the optical signal detecting apparatus 320 which is positioned opposite to the reflective data mask 110 with reference to the holographic storage medium 200, and the optical signal detecting apparatus 320 analyzes the bit type of the detected signal beam, thus confirming the data.

Meanwhile, when there are multiple data recorded at the same area, the data can be completely detected by varying the wavelengths of the reference beam.

Accordingly, even with a simple hardware, the user can utilize data of the holographic ROM with efficiency.

As described above in a few exemplary embodiments of the present invention, a writing and reading apparatus which is applicable to a holographic storage medium, is provided. It is possible to write data in holographic ROM method and distribute the same, by using a reflective data mask which enables fast data copying. It is also possible to write and read data using relatively simple hardware, and optical efficiency also increases.

## Claims

1. A holographic data writing apparatus comprising:
a laser beam irradiating device (120) which irradiates a laser beam (121) onto a storage medium (200) which is capable of storing a holographic data; the apparatus being **characterized by**:
a reflective data mask (110) which is arranged adjacent to the storage medium (200) such that the storage medium (200) is located between the laser beam irradiating device (120) and the reflective data mask (110), wherein the reflective data mask (110) stores data to be copied to the storage medium (200), and wherein when the laser beam (121) is transmitted through the storage medium (200) and is incident on the reflective data mask (110), the incident laser beam (121) is reflected from the reflective data mask (110) in the form of a signal beam (123) corresponding to the data to be copied to the storage medium (200), such that interference patterns of the laser beam (121) and the signal beam (123) are written in the storage medium (200).

2. The holographic data writing apparatus of claim 1, wherein the reflective data mask (110) stores the data to be copied in a pit pattern, and generates the signal beam (123) when the laser beam (121) is irradiated thereon, by diffracting the laser beam (121) corresponding to the pit pattern.

3. The holographic data writing apparatus of claim 2, wherein multiple data is written in a predetermined area of the storage medium (200), by replacing the reflective data mask (110) with another reflective data mask (110) which stores other data in a pit pattern.

4. The holographic data writing apparatus of claim 3, wherein the laser beam irradiating device (120) writes the data in a same area of the storage medium (200) in multiple recordings, by varying a wavelength of the laser beam (121) and irradiating the wavelength-varied laser beam (121) onto the storage medium (200).

5. A holographic data writing method comprising:
irradiating (S510) a laser beam (121) onto a storage medium (200) which is capable of storing hologram data; **characterized by**:
transmitting the laser beam (121) through the storage medium (200) and onto a reflective data mask (110) which stores therein data to be copied to the storage medium (200);
reflecting (S520) the laser beam (121) from the reflective data mask (110) to the storage medium (200) as a signal beam (123) corresponding to the data; and
writing (S530) interference patterns of the laser beam (121) and the signal beam (123) in an area of the storage medium (200) as holographic data.

6. The holographic data writing method of claim 5, wherein the reflective data mask (110) stores the data as a pit pattern, and generates the signal beam (123) when the laser beam (121) is irradiated thereto, by diffracting the laser beam (121) corresponding to the pit pattern.

7. The holographic data writing method of claim 6, further comprising recording (S540) multiple data in the area of the storage medium by varying a wavelength of the laser beam (121).

8. The holographic data writing method of claim 7, wherein the recording the multiple data comprises:
replacing the reflective data mask (110) with another reflective data mask (110) which stores therein other data; and
varying the wavelength of the laser beam (121), and irradiating the wavelength-varied laser beam (121) to the storage medium (200).

## Patentansprüche

1. Vorrichtung zum Schreiben von holografischen Daten, die Folgendes umfasst:
ein Laserstrahl-Strahlungsgerät (120), das einen Laserstrahl (121) auf ein Speichermedium (200) strahlt, das holografische Daten speichern kann, wobei die Vorrichtung **gekennzeichnet ist durch**:
eine reflektierende Datenmaske (110), die neben dem Speichermedium (200) so angeordnet ist, dass sich das Speichermedium (200) zwischen dem Laserstrahl-Strahlungsgerät (120) und der reflektierenden Datenmaske (110) befindet, wobei die reflektierende Datenmaske (110) zu kopierende Daten auf dem Speichermedium (200) speichert und wobei, wenn der Laserstrahl (121) **durch** das Speichermedium (200) geht und auf die reflektierende Datenmaske (110) fällt, der einfallende Laserstrahl (121) von der reflektierenden Datenmaske (110) in Form eines Signalstrahls (123) reflektiert wird, der den auf das Speichermedium (200) zu kopierenden Daten entspricht, so dass Interferenzstrukturen des Laserstrahls (121) und des Signalstrahls (123) in das Speichermedium (200) geschrieben werden.

2. Vorrichtung zum Schreiben von holografischen Daten nach Anspruch 1, wobei die reflektierende Datenmaske (110) die zu kopierenden Daten in einem Lochmuster speichert und den Signalstrahl (123) erzeugt, wenn der Laserstrahl (121) darauf gestrahlt wird, indem sie den Laserstrahl (121) entsprechend dem Lochmuster beugt.

3. Vorrichtung zum Schreiben von holografischen Daten nach Anspruch 2, wobei mehrere Daten in einen vorbestimmten Bereich des Speichermediums (200) geschrieben werden, indem die reflektierende Datenmaske (110) durch eine andere reflektierende Datenmaske (110) ersetzt wird, die andere Daten in einem Lochmuster speichert.

4. Vorrichtung zum Schreiben von holografischen Daten nach Anspruch 3, wobei das Laserstrahl-Strahlungsgerät (120) Daten in mehreren Aufzeichnungen in den selben Bereich des Speichermediums (200) schreibt, indem sie eine Wellenlänge des Laserstrahls (121) variiert und den wellenlängenvariierten Laserstrahl (121) auf das Speichermedium (200) strahlt.

5. Verfahren zum Schreiben von holografischen Daten, das die folgenden Schritte beinhaltet:
Strahlen (S510) eines Laserstrahls (121) auf ein Speichermedium (200), das Hologrammdaten speichern kann; **gekennzeichnet durch**:
Transmittieren des Laserstrahls (121) **durch** das Speichermedium (200) und auf eine reflektierende Datenmaske (110), die zu kopierende Daten darin auf dem Speichermedium (200) speichert;
Reflektieren (S520) des Laserstrahls (121) von der reflektierenden Datenmaske (110) auf das Speichermedium (200) als ein den Daten entsprechender Laserstrahl (123); und
Schreiben (S530) von Interferenzstrukturen des Laserstrahls (121) und des Signalstrahls (123) in einen Bereich des Speichermediums (200) als holografische Daten.

6. Verfahren zum Schreiben von holografischen Daten nach Anpruch 5, wobei die reflektierende Datenmaske (110) die Daten als ein Lochmuster speichert und den Signalstrahl (123) erzeugt, wenn der Laserstrahl (121) darauf gestrahlt wird, indem sie den Laserstrahl (121) entsprechend dem Lochmuster beugt.

7. Verfahren zum Schreiben von holografischen Daten nach Anspruch 6, das ferner das Aufzeichnen (S540) mehrerer Daten in dem Bereich des Speichermediums durch Variieren einer Wellenlänge des Laserstrahls (121) beinhaltet.

8. Verfahren zum Schreiben von holografischen Daten nach Anspruch 7, wobei das Aufzeichnen der mehreren Daten Folgendes beinhaltet:
Ersetzen der reflektierenden Datenmaske (110) durch eine andere reflektierende Datenmaske (110), die andere Daten darin speichert; und
Variieren der Wellenlänge des Laserstrahls (121) und Strahlen des wellenlängenvariierten Laserstrahls (121) auf das Speichermedium (200).

## Revendications

1. Appareil d'écriture de données holographiques comprenant:
un dispositif de rayonnement laser (120) qui projette un rayon laser (121) sur un support de données (200) capable de stocker des données holographiques ; l'appareil étant **caractérisé par** :
un masque de données réfléchissant (110) qui est agencé à proximité immédiate du support de données (200) de telle sorte que le support de données (200) est situé entre le dispositif de rayonnement laser (120) et le masque de données réfléchissant (110), le masque de données réfléchissant (110) enregistrant des données à copier sur le support de données (200) et le rayon laser (121) étant transmis à travers le support de données (200) et incident sur le masque de données réfléchissant (110), le rayon laser incident (121) étant réfléchi par le masque de données réfléchissant (110) sous la forme d'un rayon de signal (123) correspondant aux données à copier sur le support de données (200), de telle sorte que les motifs d'interférence du rayon laser (121) et du rayon de signal (123) sont écrits dans le support de données (200).

2. Appareil d'écriture de données holographiques selon la revendication 1, dans lequel le masque de données réfléchissant (110) stocke les données à copier suivant un motif en microcuvette et génère le rayon de signal (123) lorsque le rayon laser (121) est projeté dessus, en diffractant le rayon laser (121) correspondant au motif en microcuvette.

3. Appareil d'écriture de données holographiques selon la revendication 2, dans lequel les données multiples sont écrites dans une zone prédéterminée du support de données (200) en remplaçant le masque de données réfléchissant (110) par un autre masque de données réfléchissant (110) qui stocke d'autres données suivant un motif en microcuvette.

4. Appareil d'écriture de données holographiques selon la revendication 3, dans lequel le dispositif à rayonnement laser (120) écrit les données dans une même zone du support de données (200) en enregistrements multiples, en faisant varier la longueur d'onde du rayon laser (121) et en projetant le rayon laser à longueur d'onde variée (121) sur le support de données (200).

5. Procédé d'écriture de données holographiques comprenant :
la projection (S510) d'un rayon laser (121) sur un support de données (200) qui est capable de stocker des données d'hologramme ; **caractérisé par** :
la transmission du rayon laser (121) à travers le support de données (200) et sur un masque de données réfléchissant (110) qui enregistre à l'intérieur les données à copier sur le support de données (200) ;
la réflexion (S520) du rayon laser (121) du masque de données réfléchissant (110) au support de données (200) en tant que rayon de signal (123) correspondant aux données ; et
l'écriture (S530) de motifs d'interférence du rayon laser (121) et du rayon de signal (123) dans une zone du support de données (200) en tant que données holographiques.

6. Procédé d'écriture de données holographiques selon la revendication 5, dans lequel le masque de données réfléchissant (110) enregistre les données suivant un motif en microcuvette et génère le rayon de signal (123) lorsque le rayon laser (121) y est projeté, en diffractant le rayon laser (121) correspondant au motif en microcuvette.

7. Procédé d'écriture de données holographiques selon la revendication 6, comprenant en outre l'enregistrement (S540) de données multiples dans la zone du support de données en faisant varier la longueur d'onde du rayon laser (121).

8. Procédé d'écriture de données holographiques selon la revendication 7, dans lequel l'enregistrement de données multiples comprend :
le remplacement du masque de données réfléchissant (110) par un autre masque de données réfléchissant (110) qui y enregistre d'autres données ; et
la variation de la longueur d'onde du rayon laser (121) et la projection du rayon laser à longueur d'onde variée (121) sur le support de données (200).
